# EUROPEAN PATENT SPECIFICATION

(11) **EP 4 436 834 B1**
(45) Date of publication and mention of the grant of the patent: **31.12.2025**
(21) Application number: 22809922.2
(22) Date of filing: 22.11.2022
(51) Int. Cl.: B60R 1/072

(54) **ADJUSTMENT DEVICE FOR AN EXTERNAL VISION UNIT OF A VEHICLE**
VERSTELLVORRICHTUNG FÜR EINE AUSSENSICHTEINHEIT EINES FAHRZEUGS
DISPOSITIF DE RÉGLAGE POUR UNE UNITÉ DE VISION EXTERNE D'UN VÉHICULE

(30) Priority: 23.11.2021 NL 2029873
(43) Date of publication of application: 02.10.2024
(73) Proprietor: MCi (Mirror Controls International) Netherlands B.V., 3447 GK Woerden (NL)
(72) Inventor: VAN STIPHOUT, Paulus Gerardus Maria, 3447 GK Woerden (NL); DE VRIES, Hendrik Alfred Simeon, 3447 GK Woerden (NL); VAN ZUILEN, Marinus Jacobus Maria, 3447 GK Woerden (NL); JANSSEN, Emiel Sebastiaan, 3447 GK Woerden (NL); BEKKER, Anne Catharina Martha, 3447 GK Woerden (NL); JANSEN, Tom Adriaan, 3447 GK Woerden (NL); DE KAN, Arie Anthony, 3447 GK Woerden (NL)
(74) Representative: V.O.
(86) International application number: PCT/NL2022/050672
(87) International publication number: WO 2023/096482

(56) References cited:
- WO-A1-2016/076713
- WO-A1-2019/226423
- GB-A- 2 244 965
- US-A1- 2013 107 386

## Description

### FIELD

The invention relates to a device for adjusting an orientation of an external vision element, such as an external rear view mirror or camera, of a vehicle.

### BACKGROUND

Adjustment devices for an external vision unit for a vehicle typically include a vision element, such as a mirror, camera and/or display. They are configured to adjust an orientation of the vision element relative to the vehicle, typically about a horizontal and a vertical axis, such that a driver of the vehicle can fine fine-tune its rearward view.

An adjustment device can for example be part of an external vision unit of a vehicle, wherein the vision element is often carried by a frame. The frame is adjustable relative to a base, which base is configured to be mounted to a body of the vehicle.

Often, the external vision unit is further adjustable between a folded position, or park position, in which the frame substantially extends parallel to the vehicle, and an extended position in which the frame extends substantially outward from the vehicle. This operation is often referred to as power fold actuation. The power fold actuation can be driven by a dedicated power fold actuator, which is separate from a fine tuning adjustment device for fine tuning the driver's rearward view in the extended position of the external vision unit.

In some instances, the adjustment devices may be arranged to, in addition to fine tuning an orientation of the vision element about two respective axes, drive the power fold actuation between the folded position and the extended position. Such adjustment devices may thus be regarded as conventional mirror adjustment devices with additional power fold capabilities, or as a multi-axis power fold actuator. An example of such device is described in EP3218226, where the adjustment of the vision element is driven by two separate electromotors; a first one for adjustment about the vertical axis and a second one for adjustment about the horizontal axis. However, because of the relatively high clamping forces required to retain such adjustment device in an adjusted position, both electromotors need to be relatively powerful. This increases the overall cost related to the adjustment device.

### SUMMARY

It is an aim to provide an adjustment device that ameliorates the above-mentioned problem. In particular, the invention aims to provide an adjustment device at reduced costs. The invention hereto provides an adjustment device for adjusting an orientation of an external vision element of a vehicle about a first pivot axis and a second pivot axis. The adjustment device comprises a base for coupling to a vehicle; a frame pivotably coupled to the base, the frame having a first frame part being pivotable relative to the base about the first pivot axis and a second frame part being pivotable relative to the first frame part about the second pivot axis; and a drive unit for driving the frame pivotally about the first pivot axis and the second pivot axis. The drive unit comprises a first powertrain between the first frame part and the base having a first electromotor connected via a first transmission to a first driven element for driving the first frame part relative to the base about the first pivot axis, and a second powertrain between the first frame part and the second frame part having a second electromotor connected via a second transmission to a second driven element for driving the second frame part relative to the first frame part about the second pivot axis. The second electromotor has a lower power rating compared to a power rating of the first electromotor. The second electromotor may hence have a lower maximum power consumption, compared to a maximum power consumption of the first electromotor. The second transmission applies a second speed-reducing transmission ratio from the second electromotor to the second driven element, the second speed-reducing transmission ratio providing a greater speed reduction than a first, e.g. speed-reducing, transmission ratio provided by the first transmission. Hence, the device comprises a first powertrain, which includes the relatively high-powered first electromotor and the first transmission, dedicated for pivoting the frame about the first pivot axis, and a separate second powertrain, which includes the relatively low-powered second electromotor and the second transmission, dedicated for pivoting the frame about the second pivot axis.

The adjustment device can accordingly include only one relatively high-powered electromotor which enables the adjustment device to be controlled by a modern standard door control module of a vehicle, which may have only one high-power control output for controlling the adjustment device. The first electromotor having the high power rating can accordingly be controlled by the only one high-power control output of the modern standard door control module, while the second electromotor having the lower power rating can be controlled by a low-power control output of the modern standard door control module. To account for the reduced power of the second electromotor, the second transmission is operatively arranged between the second electromotor and the second driven element, which second transmission trades-off adjustment speed about the second pivot axis for a torque increase at the second driven element. It may in practice be acceptable to have a relatively low adjustment speed about one of the two pivot axes, for example about a horizontally extending pivot axis. The first pivot axis may particularly correspond to a power fold axis, about which the adjustment frame is pivoted from a folded position to an extended position. This way, the power fold actuation can be driven by the relatively high-powered electromotor, with a relatively high adjustment speed. The first pivot axis may thus for example extend vertically in use. The second pivot axis may for example extend non-parallel to the first pivot axis, for example transverse to the first pivot axis. In use, the second pivot axis may extend horizontally.

The first driven element may be part of the base, e.g. a gearing integrally formed with the base or rigidly fixed to a remainder of the base. The second driven element may be part of the second frame part, e.g. a gearing integrally formed with the second frame part or rigidly fixed to a remainder of the second frame part.

The maximum power consumption of the second electromotor may particularly be lower than the maximum power consumption of the first electromotor by a factor of between 2 and 20, such as by a factor of between 5 and 15, e.g. a factor 10. The maximum power consumption of the first actuator may for example be between 10-20 Watt, such as about 12 Watt, and the maximum power consumption of the second electromotor may for example be between 1-5 Watt, such as about 2 Watt. It will be appreciated that the door control module may hence send a corresponding respective power signal to the first electromotor and/or the second electromotor.

Space for accommodating the drive unit is limited. Therefore, the second electromotor has a smaller form factor compared to the first electromotor. Particularly the second electromotor volume may be smaller than the first electromotor volume, for example by a factor of between 1.1 and 4. The volume of the second electromotor may for example be 50% less than the volume of the first electromotor. The saved space from the smaller electromotor may for example be occupied by additional components of the second transmission for providing a suitable speed reduction ratio.

The first and second electromotors may be powered by a common door control module of the vehicle. The door control module can control both the first electromotor and the second electromotor. Only the first electromotor may require relatively high power, e.g. draw relatively high currents. The second electromotor may require only a fraction of the power consumed by the first electromotor. The first electromotor and the second electromotor may particularly be low-powered electromotors, particularly low-powered DC electromotors.

A maximum combined current consumption of the first electromotor and the second electromotor combined is at most between 1 and 2 Ampere, preferably at most 1.5 Ampere. The second actuator may draw only a fraction of the current that the first actuator draws, for example only 50% of the current that the first electromotor draws.

The first pivot axis and the second pivot axis may extend non-parallel to each other. The first pivot axis may for example correspond to a power fold axis, e.g. a vertical axis in use, about which the external vision unit is pivoted between a folded position and an extended position. The second pivot axis may be substantially transverse to the first pivot axis.

The second transmission ratio may for example apply a substantial reduction between the second electromotor output and the second driven element, e.g. a reduction ratio of at least 1:5, such as a reduction ratio of between 1:5 and 1:10. Hereto, the second transmission may comprise an evoloid and/or an evoloid gear. For example, a transmission stage of the second transmission may be obtained by an evoloid meshing with an evoloid gear. The evoloid may for example have only a few teeth, such as only one tooth, only two teeth, or any number of teeth less than 6. Evoloids i.e. gears having evoloid toothing, and evoloid gears configured for meshing with an evoloid are for example described in Roth, ISBN 3-540-64236-6, p2.

The second transmission may comprise at least two reduction stages, such as at least three reduction stages, for reducing an output speed of the second electromotor to a reduced speed of the second driven element. For example, the second transmission may comprise an input transmission stage from the second electromotor output to an intermediate transmission member, e.g. an intermediate shaft; and an intermediate transmission stage between the intermediate transmission member to the second driven element. The second transmission may particularly comprise three transmission stages: an input transmission stage from the second electromotor output to a primary intermediate transmission member, e.g. a primary intermediate shaft, an intermediate transmission stage between the primary intermediate transmission member and a secondary intermediate transmission member, e.g. a secondary intermediate shaft, and an output transmission stage from the secondary intermediate transmission member to the second driven element.

The first transmission, being coupled to the relatively powerful first electromotor, may apply a smaller reduction ratio compared to the second transmission ratio. Hence, the first transmission may optionally comprise at most two transmission stages, such as two, or only one transmission stage, from the first electromotor output to the first driven element. A direct-drive coupling from the first electromotor to the first driven element may also be possible. The first transmission ratio may be a reduction ratio, or a unitary transmission ratio for example. Optionally, the first frame part is pivotable relative to the base only about the first pivot axis, and/or the second frame part is pivotable relative to the first frame part only about the second pivot axis. The first electromotor and the second electromotor may be positioned adjacent to each other. For example, for a particular compact setup, an output axis of the first electromotor and an output axis of the second electromotor extend parallel to each other. The first electromotor may for example comprise a first output organ, e.g. a shaft, that is rotatably driven about the first output axis. Similarly, the second electromotor may for example comprise a second output organ, e.g. a shaft, that is rotatably driven about the second output axis. A gearing, e.g. a worm, of the respective first and second transmission may be fixed to the respective output organs. Various orientations of the electromotors relative to each other and relative to the first and second pivot axes are possible. For example, the output axis of the first electromotor may be parallel to the first pivot axis and/or the output axis of the second electromotor may be parallel to the first pivot axis. The output axis of the first electromotor may be parallel to the second pivot axis and/or the output axis of the second electromotor may be parallel to the second pivot axis. Optionally, the frame comprises a shell-shaped cover which defines a cavity for holding the drive unit. The shell-shaped cover may be integrated with the frame, particularly with the second frame part. The shell-shaped cover may comprise a proximal side for being, in use, arranged proximate the vehicle, and a distal side opposite the proximal side, wherein the first electromotor and the second electromotor are arranged adjacent each other in the cavity; the first electromotor at the proximal side and the second electromotor at the distal side. The shell-shaped cover may delimit an asymmetrically shaped cavity, such as tapering towards the distal end, for improving aerodynamic properties. Hence, a tapered distal end may have little room for accommodating an electromotor and transmission coupled thereto. The second electromotor, being relatively low powered with respect to the first electromotor, can however be designed to have a relatively small form factor, and may hence be held at the distal end of the shell-shaped cover. An output axis of the second electromotor may extend parallel to the first pivot axis. For a particular compact setup, the second electromotor may be arranged in the cavity in an orientation where the output axis of the second electromotor extends transverse to the first pivot axis, e.g. parallel to the second pivot axis.

According to a further aspect is provided an external vision unit for a vehicle. The vision unit may comprise an adjustment device as described herein, and a vision element, such as a mirror, camera and/or display, mounted to the frame. The vision element may particularly be mounted to the second frame part.

According to an aspect, a system is provided, comprising an adjustment device as described herein, and a door control module operatively connected to the adjustment device for sending a power signal to the adjustment device. Optionally, the power signal comprises only one high-power signal of at least 5 Watt, more particularly at least 10 Watt, for powering the first electromotor. Optionally, the power signal comprises a low-power signal of at most 5 Watt, such as at most 2 Watt, for powering the second electromotor.

According to an aspect, a system is provided comprising an adjustment device as described herein, and a door control module operatively connected to the adjustment device. The door control module may be arranged to send a power signal to the adjustment device for powering the first electromotor and/or the second electromotor. The door control module may particularly be configured to selectively send a first power signal to the first electromotor for operating the first electromotor at a first speed and a second power signal to the first electromotor for operating the first electromotor at a second, lower, speed. Hence, the control module may be considered to provide a virtual transmission for the first powertrain, which is selectively operable according to at least two virtual transmission ratios. The second power signal may be a modulated power signal, such as a pulse-width modulated power signal, for reducing an average power supply to the first electromotor. For example, the door control module may be configured to only reduce the power supply to the first electromotor, e.g. by means of pulse width modulation or voltage reduction, only in case the frame is within a predefined angular range of positions about the first pivot axis, e.g. close to the extended position, to reduce the adjustment speed about the first pivot axis within this range of positions. Hereto, the system may for instance comprise a sensor for sensing a position of the frame, particularly of a position of the first frame part relative to the base and/or the first frame part relative to the second frame part. The sensor may for example comprise a potentiometer or ripple counter, for determining a position of the frame relative to the base. The door control module may be connected to the sensor, and configured to receive a sensor signal from the sensor indicative of the position of the frame. The door control module may be configured to modulate the power signal, and send the modulated power signal, e.g. to the first electromotor, based on the received sensor signal.

Optionally, the system comprises an intermediate control unit interconnected between the door control module and the first electromotor and/or the second electromotor. The intermediate control unit may be considered to be part of the adjustment device. It may for example be accommodated within the cavity formed by the shell-shaped cover. The intermediate control unit may be configured to modulate a power signal from the door control module to the first electromotor and/or the second electromotor. For example, the local control unit may be configured to receive a power signal from the door control module, and, based on the received power signal, send a modulated power signal to the first electromotor. The modulated signal may particularly have a lower power than the received power signal. For example, the intermediate control unit may reduce a voltage of the power signal received from the door control module. The modulated signal may also, for example, be a pulse-modulated signal.

The intermediate control unit may be configured to send the modulated power signal to the first electromotor, further based on a position of the frame, e.g. a position of the first frame part relative to the base and/or relative to the second frame part. For example, the intermediate control unit may be configured to only reduce the power supply to the first electromotor in case the frame is within a predefined angular range of positions about the first pivot axis, e.g. close to the extended position, to reduce the adjustment speed about the first pivot axis within this range of positions. Hereto, the system may for instance comprise a sensor for sensing a position of the frame, particularly of a position of the first frame part relative to the base and/or the first frame part relative to the second frame part. The intermediate control unit may be connected to the sensor, and configured to receive a sensor signal from the sensor indicative of the position of the frame. The intermediate control unit may be configured to modulate the received power signal, and send the modulated power signal, e.g. to the first electromotor, based on the received sensor signal. According to another aspect is provided a vehicle, particularly a car, comprising an adjustment device, a system, or an external vision unit as described herein.

It will be appreciated that any of the aspects, features and options described herein can be combined. It will particularly be appreciated that any of the aspects, features and options described in view of the adjustment device apply equally to the external vision unit, and vice versa. It will also be appreciated that any of the aspects, features and options described in view of the adjustment device apply equally to the vehicle.

### BRIEF DESCRIPTION OF THE DRAWINGS

Embodiments of the present invention will now be described in detail with reference to the accompanying drawings in which:
Figure 1 shows an example of an adjustment device;
Figure 2 shows an example of an adjustment device
Figures 3A and 3B show an example of an adjustment device;
Figure 4 shows an example of an external vision unit.
Figures 5A and 5B show an example of

### DETAILED DESCRIPTION

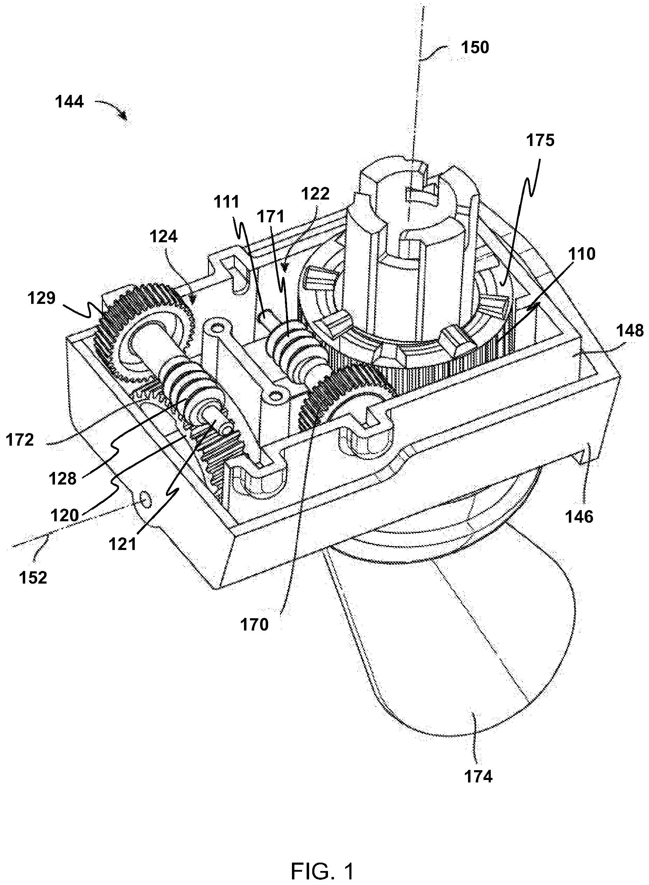

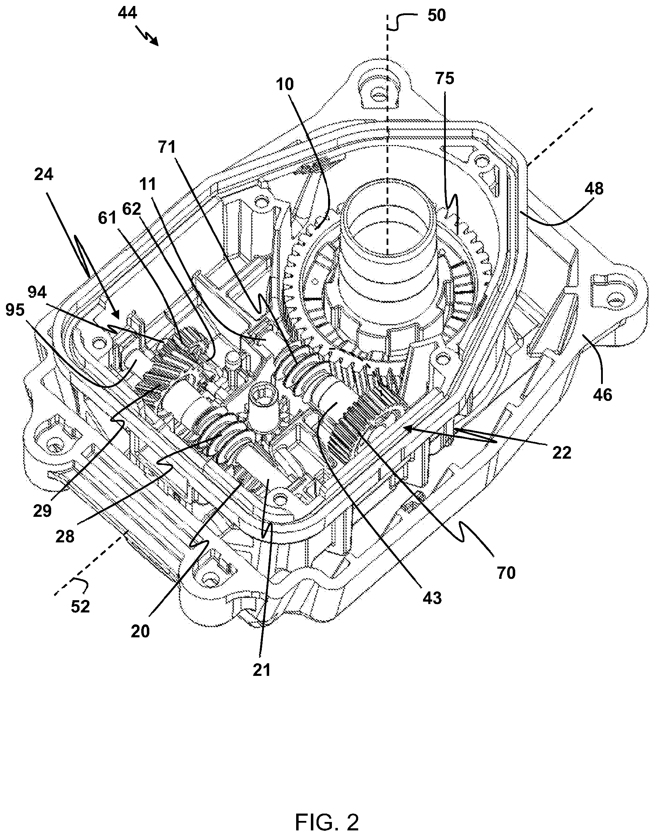

Figure 1 shows an example of an adjustment device 44 for an external vision unit according to the state of the art. Figures 2-5 show examples of an adjustment device according to the invention. The device 44 comprises a base 74, which is here arranged to be mounted to the body of a motor vehicle, such as a car. A frame 46, 48 is pivotably arranged about the base 74, about a first pivot axis 50. In this example the frame comprises a first frame part 46 and a second frame part 48. The first and second frame parts 46, 48 are commonly pivotable about the first pivot axis. The second frame part 48 is movably coupled to the first frame part 46. More specific, the first and second frame parts 46, 48 are in this example pivotable relative to each other about a second pivot axis 52. The first frame part 46 is in this example only pivotable relative to the base 74 about the first pivot axis 50. The first frame part 46 is not pivotable relative to the base about the second pivot axis 52. The second frame part 48 is pivotable relative to the base 74 about the first pivot axis 50 and the second pivot axis 52. The second frame part 48 is particularly pivotable relative to the first frame part 46 about the second pivot axis 52.

The frame 46, 48 may for example include, or be coupled to, a shell-shaped cover for covering a vision element such as a mirror, camera, LIDAR and/or display. The shell-shaped cover may particularly be integrally formed with the second frame part 48. The vision element can be coupled to the frame 46, 48 for being adjusted about the first and second pivot axes 50, 52. The vision element may particularly be coupled to the second frame part 46.

The adjustment device 44 is movable between a folded position, in which the frame 46, 48 substantially extends parallel to the vehicle, and an extended position in which the frame 46, 48 extends substantially outward from the vehicle. Figure 1 shows the adjustment device in the extended position. The adjustment device can be moved between the folded and the extended position by pivoting the frame 46, 48 relative to the base 74 about the first pivot axis 50.

In the adjustment device 44, comprises a drive unit which includes two electrical actuators, i.e. two electromotors, namely a first electromotor 100 and a second electromotor 200. The electromotors 100 and 200 are omitted from figure 1. A first powertrain 23 is provided for pivoting the frame 46, 48 relative to the base about the first pivot axis 50. The first powertrain 23 includes the first electromotor 100, which is connected, via a first transmission 22, to a first driven element 10. A second powertrain 25 is provided for pivoting the frame 46, 48, particularly the frame parts 46, 48 relative to each other, about the second pivot axis 52. The second powertrain 25 includes the second actuator 200, which is connected, via a second transmission 24, to a second driven element 20. The first powertrain 23 and the second powertrain 25 are separate from each other. In this example, the first driven element 10 includes a gearing 75 fixed to the base 74. The second driven element 20 includes in this example a gearing 72 fixed to the second frame part 48.

In accordance with the invention, and shown in figures 2-5, the second electromotor 200 has a lower maximum power consumption compared to a maximum power consumption of the first electromotor 100. For example, the first electromotor 100 is arranged to draw at most 1 Ampere of current while the second electromotor 200 is arranged to draw at most 0.5 Ampere of current. In order to overcome clamping forces with which the adjustment device 44 is held in position after adjustment, using the less powerful second electromotor 200, the second transmission 24 applies in comparison with the first transmission 22 an additional speed-reduction from the second electromotor 200 to the second driven element 20. The additional reduction in speed provided by the second transmission 24 comes with an increased torque transmission from the second electromotor 200 to the second driven element 20.

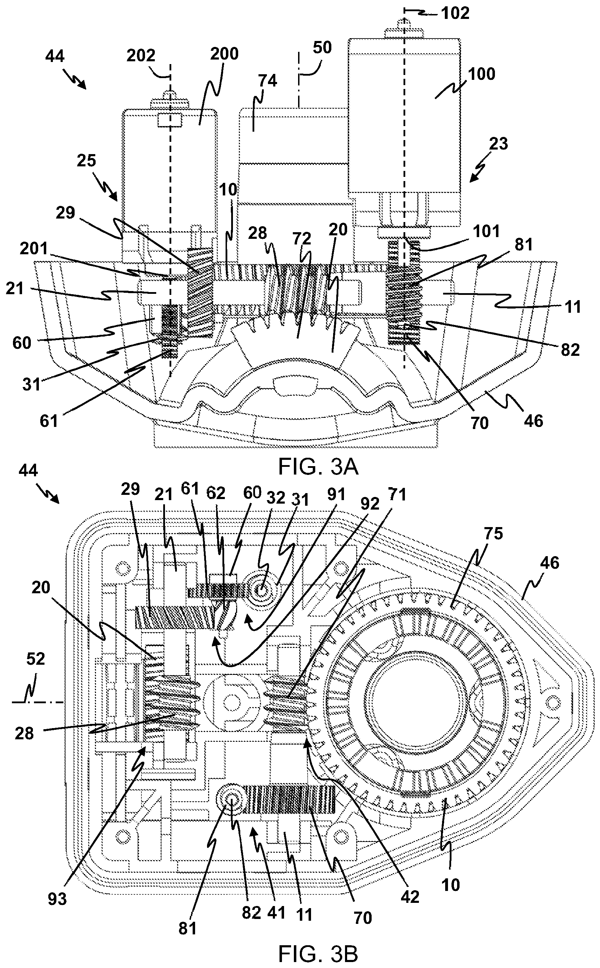

Figure 3A shows frontal view of the adjustment device 44, and figure 3B shows a top view of the adjustment device 44. Part of the frame 46, 48 has been omitted in the figure 3A to show details of the first and second transmissions 22, 24. In figure 3B, the electromotors 100, 200 have been omitted for the same reason.

The first transmission 22 comprises two transmission stages in this example. A first input transmission stage 41 is provided between an output 101 of the first electromotor 100, here a shaft 82 provided with a first input worm 81, and a first transmission intermediate member, here a shaft 11 provided with a first worm gear 70 and a first output worm 71. Here the first input worm 81, which is rotatably driven by the first electromotor 100, meshes with the first worm gear 70 to transfer torque to the intermediate member. The first output worm 71 rotates together with the first worm gear 70, and meshes with a base gearing 75 of the base 74 to provide a first output transmission stage 42.

Compared to the first transmission 22, the second transmission 24 comprises an additional transmission stage. The second transmission 24 comprises a second input transmission stage 91 between the output 201 of the second transmission 200, here a shaft 32 provided with a second input worm 31, and a second transmission primary intermediate member, here a shaft 60 provided with a worm gear 61 and an evoloid 62. The worm gear 61 of the primary intermediate member meshes with the second input worm 31, hence providing the second input transmission stage 91.

An intermediate transmission stage 92 is provided between the primary intermediate member, here including shaft 60, to a secondary intermediate member, here including shaft 21 provided with an evoloid gear 29 and a second output worm 28. The evoloid 62 of the primary intermediate transmission member meshes with the evoloid gear 29 of the secondary intermediate transmission member, hence providing the intermediate transmission stage 92.

A second output transmission stage 93 is provided between the secondary intermediate member, here including shaft 21, and the second driven element 20. The second output worm 28, which rotates together with the evoloid gear 29, meshes with the second driven element 20 here a gearing 72 of the frame, particularly of the second frame part 48, to provide the second output transmission stage 93. Driving the second driven element 20 particularly pivots the second frame part 48 relative to the base 74 about the second pivot axis 52.

In this example, the second transmission 24 applies a transmission ratio of approximately 1:8, e.g. an input angular speed of about 30 degrees per second is reduced to an output angular speed of about 4 degrees per second.

The meshing evoloid 62 and evoloid gear 29 is particularly effective for applying a large reduction ratio, as the evoloid 62 can be given very few teeth, such as only one tooth or only two teeth. In this example the evoloid 62 has only three teeth.

The electromotors 100, 200 are in this example arranged in a standing position, wherein the electromotor outputs 101, 201 are rotatably driven about parallel axes 102, 202, in use extending vertically and parallel to the first pivot axis. It will however be appreciated that other orientations of the electromotors 100, 200 are also possible.

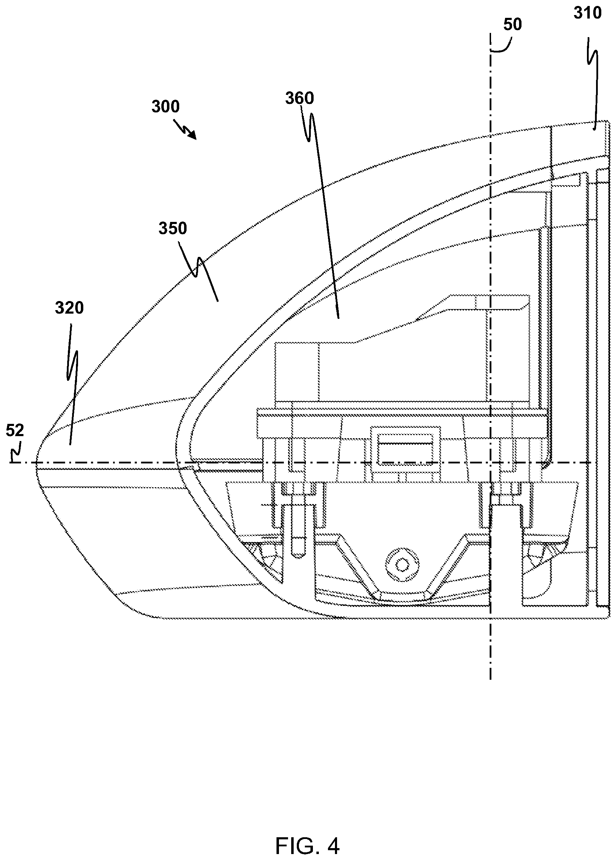

Figure 4 shows an example of an external vision unit of a vehicle, 300, having shell-shaped cover 350 that defines a cavity 360 for holding the drive unit of the adjustment device 44. The shell-shaped cover 350 may be part of the frame 46, 48, or may be fixed thereto, particularly to the second frame part 48. The shell-shaped cover 350 has a proximal end 310, in use proximate the vehicle, and a distal end 320 opposite the proximal end 310. The shell-shaped cover 350 has is tapered towards the distal end 320, primarily for aerodynamic reasons. Hence, as also shown in figure 3A, the first and second electromotors 100, 200 can be arranged adjacent each other, wherein the first electromotor 100 is accommodated in the cavity 360 nearer the proximal end 310 and the second electromotor 200 is accommodated nearer the distal end 320 of the shell shaped cover 350.

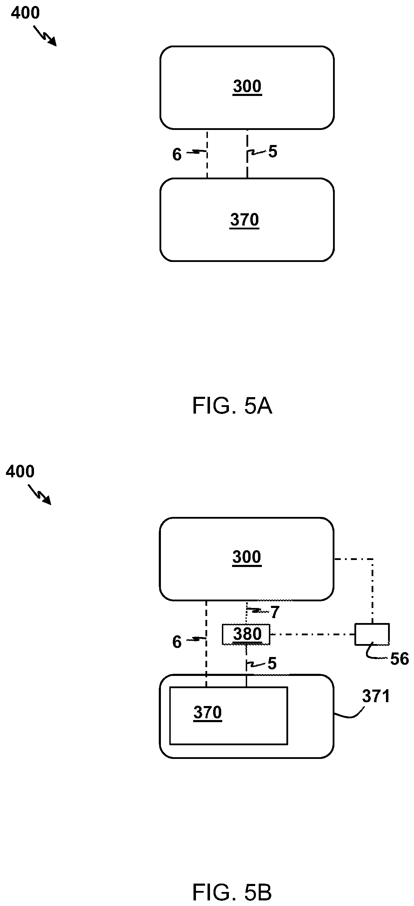

Figures 5A and 5B shows a schematic example of a system 400, comprising an external vision unit 300 and a control module, particularly a door control module 370 of a vehicle 371. The door control module 370 is connected for controlling an orientation of the external vision element relative to the vehicle 371. The control module 370 may be connected to the adjustment device to send a power signal to the adjustment device 44.

The door control module 370 may be arranged to send a power signal to the adjustment device 44 for powering the first electromotor 100 and/or the second electromotor 200. The door control module may for example send a high-power signal 5 to the first electromotor 100 of the external vision unit 300, e.g. of between 10 and 20 Watt, and a low-power signal 6 to the second electromotor 200 of the external vision unit 300, e.g. of between 1 and 2 Watt. The door control module 370 may particularly be configured to send only one high-power signal 5 to the adjustment device.

In this example, the door control module 370 is configured to selectively sending a first power signal to the first electromotor 100 for operating the first electromotor 100 at a first speed and a second power signal to the first electromotor 100 for operating the first electromotor 100 at a second, lower, speed. The second power signal may be effectively lower than the first power signal, for selectively operating the first electromotor 100 at different speeds. Hence, the door control module 370 may be considered to provide a virtual transmission for the first powertrain, such that the first powertrain is selectively operable according to at least two virtual transmission ratios. A first of the two virtual transmission ratios may be associated with the first power signal, and a second one of the two virtual transmission ratios may be associated with the second, lower, power signal. It will be appreciated that the system 400 need not necessarily include the adjustment device as shown in figures 2-4, but that it can include another adjustment device instead, e.g. a prior art adjustment device as shown in figure 1 or another adjustment device.

The second power signal may be a modulated power signal 7, such as a pulse-width modulated power signal, for reducing an average power supply to the first electromotor 100. In an embodiment, the door control module 370 is configured to only reduce the power supply to the first electromotor 100, e.g. by means of pulse width modulation or voltage reduction, only in case the frame 46, 48 is within a predefined angular range of positions about the first pivot axis 50, for example if frame 46, 48 is close to the extended position, to reduce the adjustment speed about the first pivot axis 50 within this range of positions. Hereto, the system 400 in this example comprise a sensor 56 for sensing a position of the frame 46, 48, particularly of a position of the first frame part 46 relative to the base 74 and/or the first frame part 46 relative to the second frame part 48. The sensor 56 may for example comprise a potentiometer or ripple counter, for determining a position of the frame 46, 48 relative to the base 74. The door control module 370 is, here, connected to the sensor 56, and configured to receive a sensor signal from the sensor 56 indicative of the position of the frame 46, 48. The door control module 370 is in this example configured to send a modulated power signal to the first electromotor 100, for example, based on the received sensor signal.

In the example of figure 5B, the system comprises an intermediate control unit 380 interconnected between the door control module 370 and the first electromotor 100 and/or the second electromotor 200. The intermediate control unit 380 may be considered part of the external vision unit 300. It may for example be accommodated within the cavity 360 formed by the shell-shaped cover 350. The intermediate control unit 380 is, here, configured to modulate a power signal 5 it receives from the door control 370 and send the modulated power signal to the first electromotor 100 and/or the second electromotor 200. For example, the local intermediate control unit 380 may be configured to receive a high-power signal 5 from the door control module 380, and, based on the received power signal 5, send a modulated power signal 7 to the first electromotor 100. The modulated signal 7 may have a lower average power than the received power signal 5. For example, the intermediate control unit 380 may reduce a voltage of the power signal 5 received from the door control module. The modulated signal may for example be a pulse-modulated signal, such as a pulse-width-modulated signal.

Herein, the invention is described with reference to specific examples of embodiments of the invention.

However, other modifications, variations, and alternatives are also possible. The specifications, drawings and examples are, accordingly, to be regarded in an illustrative sense rather than in a restrictive sense.

For the purpose of clarity and a concise description features are described herein as part of the same or separate embodiments,

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. Adjustment device for adjusting an orientation of an external vision element of a vehicle about a first pivot axis (50) and a second pivot axis (52), the adjustment device comprising:
a base (74) for coupling to a vehicle;
a frame (46, 48) pivotably coupled to the base (74), the frame having a first frame part (46) being pivotable relative to the base (74) about the first pivot axis (50) and a second frame part (48) being pivotable relative to the first frame part (46) about the second pivot axis (52); and
a drive unit for driving the frame (46, 48) pivotally about the first pivot axis (50) and the second pivot axis (52);
wherein the drive unit comprises a first powertrain (23) operative between the first frame part (46) and the base (74) having a first electromotor (100) connected via a first transmission (22) to a first driven element (10) for driving the first frame part (46) relative to the base (74) about the first pivot axis (50), and a second powertrain (25) operative between the first frame part (46) and the second frame part (48) having a second electromotor (200) connected via a second transmission (24) to a second driven element (20) for driving the second frame part (48) relative to the first frame part (46) about the second pivot axis (52);
wherein the second electromotor (200) has a lower power rating compared to a power rating of the first electromotor (100), and wherein the second transmission (24) applies a second speed-reducing transmission ratio from the second electromotor (200) to the second driven element (20), the second speed-reducing transmission ratio providing a greater speed reduction than a first transmission ratio provided by the first transmission (22),
wherein the second electromotor (200) has a smaller form factor compared to the first electromotor (100).

2. Device of claim 1, wherein the second electromotor volume is smaller than the first electromotor volume by a factor of between 1.1 and 4, and/or wherein the maximum power consumption of the second electromotor (200) is lower than the maximum power consumption of the first electromotor (100) by a factor of between 1.1 and 4.

3. Device of any preceding claim, wherein the first and second electromotors (100, 200) are powered by a common door control module (370) of the vehicle.

4. Device of any preceding claim, wherein the first electromotor (100) and the second electromotor (200) are low-powered electromotors, particularly low-powered DC electromotors.

5. Device of any preceding claim, wherein a maximum combined current consumption of the first electromotor (100) and the second electromotor (200) combined is at most between 1 and 2 Ampere, preferably at most 1.5 Ampere.

6. Device of any preceding claim, wherein the first pivot axis (50) and the second pivot axis (52) are non-parallel to each other.

7. Device of any preceding claim, wherein the second transmission (24) comprises at least three reduction stages for reducing an output speed of the second electromotor (200) to a reduced speed of the second driven element (20).

8. Device of claim 7, wherein the second transmission (24) comprises an input transmission stage from the second electromotor output to a primary intermediate transmission member, an intermediate transmission stage between the primary intermediate transmission member and a secondary intermediate transmission member, and an output transmission stage from the secondary intermediate transmission member to the second driven element (20), optionally wherein the second transmission (24) includes an evoloid and/or an evoloid gear.

9. Device of any preceding claim, wherein the first transmission (22) comprises a single transmission stage from the first electromotor output to the first driven element (10).

10. Device of claim 9, wherein the first frame part (46) is pivotable relative to the base (74) only about the first pivot axis (50), and/or wherein the second frame part (48) is pivotable relative to the first frame part (46) only about the second pivot axis (52).

11. Device of any preceding claim, wherein an output axis of the first electromotor (100) is parallel to the first pivot axis (50) and/or wherein an output axis of the second electromotor (200) is parallel to the first pivot axis (50).

12. Device of any preceding claim, wherein an output axis of the first electromotor is parallel to the second pivot axis (52) and/or wherein an output axis of the second electromotor (200) is parallel to the second pivot axis (52).

13. Device of any preceding claim, wherein the frame comprises a shell-shaped cover which defines a cavity for holding the drive unit, the shell-shaped cover comprising a proximal side for being, in use, arranged proximate the vehicle, and a distal side opposite the proximal side, wherein the first electromotor (100) and the second electromotor (200) are arranged adjacent each other in the cavity, the first electromotor (100)at the proximal side and the second electromotor (200) at the distal side.

14. External vision unit for a vehicle, comprising an adjustment device of any preceding claim, and a vision element mounted to the frame.

15. System comprising an adjustment device according to any of claims 1-13 or an external vision unit according to claim 14, and a door control module (370) operatively connected to the adjustment device for sending a power signal to the adjustment device, wherein, particularly, the power signal comprises only one high-power signal of at least 5 Watt, more particularly at least 10 Watt, for powering the first electromotor (100), and optionally wherein the power signal comprises a low-power signal of at most 5 Watt, such as at most 2 Watt, for powering the second electromotor (200).

## Patentansprüche

1. Einstellvorrichtung zum Einstellen einer Ausrichtung eines externen Sichtelements eines Fahrzeugs um eine erste Schwenkachse (50) und eine zweite Schwenkachse (52), wobei die Einstellvorrichtung Folgendes umfasst:
eine Basis (74) zum Verbinden mit einem Fahrzeug;
einen Rahmen (46, 48), der schwenkbar mit der Basis (74) verbunden ist, wobei der Rahmen einen ersten Rahmenteil (46), der relativ zur Basis (74) um die erste Schwenkachse (50) schwenkbar ist, und einen zweiten Rahmenteil (48) aufweist, der relativ zum ersten Rahmenteil (46) um die zweite Schwenkachse (52) schwenkbar ist; und
eine Antriebseinheit zum schwenkbaren Antreiben des Rahmens (46, 48) um die erste Schwenkachse (50) und die zweite Schwenkachse (52);
wobei die Antriebseinheit einen ersten Antriebsstrang (23) umfasst, der zwischen dem ersten Rahmenteil (46) und der Basis (74) wirkt und einen ersten Elektromotor (100) aufweist, der über ein erstes Getriebe (22) mit einem ersten angetriebenen Element (10) verbunden ist, um das erste Rahmenteil (46) relativ zur Basis (74) um die erste Schwenkachse (50) anzutreiben, und einen zweiten Antriebsstrang (25), der zwischen dem ersten Rahmenteil (46) und dem zweiten Rahmenteil (48) wirkt und einen zweiten Elektromotor (200) aufweist, der über ein zweites Getriebe (24) mit einem zweiten angetriebenen Element (20) verbunden ist, um das zweite Rahmenteil (48) relativ zum ersten Rahmenteil (46) um die zweite Schwenkachse (52) anzutreiben;
wobei der zweite Elektromotor (200) eine geringere Nennleistung als der erste Elektromotor (100) aufweist und wobei das zweite Getriebe (24) ein zweites Untersetzungsgetriebeverhältnis vom zweiten Elektromotor (200) auf das zweite angetriebene Element (20) anwendet, wobei das zweite Untersetzungsgetriebeverhältnis eine höhere Drehzahlverringerung bereitstellt als ein erstes Übersetzungsverhältnis, das durch das erste Getriebe (22) bereitgestellt wird,
wobei der zweite Elektromotor (200) im Vergleich zum ersten Elektromotor (100) einen kleineren Formfaktor aufweist.

2. Vorrichtung nach Anspruch 1, wobei das Volumen des zweiten Elektromotors um einen Faktor zwischen 1,1 und 4 kleiner ist als das Volumen des ersten Elektromotors und/oder wobei der maximale Leistungsverbrauch des zweiten Elektromotors (200) geringer ist als der maximale Leistungsverbrauch des ersten Elektromotors (100) um einen Faktor zwischen 1.1 und 4.

3. Vorrichtung nach einem der vorstehenden Ansprüche, wobei der erste und der zweite Elektromotor (100, 200) von einem gemeinsamen Türsteuerungsmodul (370) des Fahrzeugs angetrieben werden.

4. Vorrichtung nach einem der vorstehenden Ansprüche, wobei der erste Elektromotor (100) und der zweite Elektromotor (200) Elektromotoren mit geringer Leistung sind, insbesondere Gleichstrom-Elektromotoren mit geringer Leistung.

5. Vorrichtung nach einem der vorstehenden Ansprüche, wobei die maximale kombinierte Stromaufnahme des ersten Elektromotors (100) und des zweiten Elektromotors (200) zusammen höchstens zwischen 1 und 2 Ampere, vorzugsweise höchstens 1,5 Ampere beträgt.

6. Vorrichtung nach einem der vorstehenden Ansprüche, wobei die erste Schwenkachse (50) und die zweite Schwenkachse (52) nicht parallel zueinander sind.

7. Vorrichtung nach einem der vorstehenden Ansprüche, wobei das zweite Getriebe (24) mindestens drei Untersetzungsstufen zum Untersetzen einer Abtriebsdrehzahl des zweiten Elektromotors (200) auf eine reduzierte Drehzahl des zweiten angetriebenen Elements (20) umfasst.

8. Vorrichtung nach Anspruch 7, wobei das zweite Getriebe (24) eine Eingangsgetriebestufe vom Ausgang des zweiten Elektromotors zu einem primären Zwischengetriebeelement, eine Zwischengetriebestufe zwischen dem primären Zwischengetriebeelement und einem sekundären Zwischengetriebeelement und eine Ausgangsgetriebestufe vom sekundären Zwischengetriebeelement zum zweiten angetriebenen Element (20), wobei das zweite Getriebe (24) optional ein Evoloid und/oder ein Evoloidzahnrad umfasst.

9. Vorrichtung nach einem der vorstehenden Ansprüche, wobei das erste Getriebe (22) eine einzige Getriebestufe vom Ausgang des ersten Elektromotors zum ersten angetriebenen Element (10) umfasst.

10. Vorrichtung nach Anspruch 9, wobei das erste Rahmenteil (46) relativ zur Basis (74) nur um die erste Schwenkachse (50) schwenkbar ist und/oder wobei das zweite Rahmenteil (48) relativ zum ersten Rahmenteil (46) nur um die zweite Schwenkachse (52) schwenkbar ist.

11. Vorrichtung nach einem der vorstehenden Ansprüche, wobei eine Abtriebsachse des ersten Elektromotors (100) parallel zur ersten Schwenkachse (50) verläuft und/oder wobei eine Abtriebsachse des zweiten Elektromotors (200) parallel zur ersten Schwenkachse (50) verläuft.

12. Vorrichtung nach einem der vorstehenden Ansprüche, wobei eine Abtriebsachse des ersten Elektromotors parallel zur zweiten Schwenkachse (52) verläuft und/oder wobei eine Abtriebsachse des zweiten Elektromotors (200) parallel zur zweiten Schwenkachse (52) verläuft.

13. Vorrichtung nach einem der vorstehenden Ansprüche, wobei der Rahmen eine schalenförmige Abdeckung umfasst, die einen Hohlraum zum Halten der Antriebseinheit definiert, wobei die schalenförmige Abdeckung eine proximale Seite, die im Gebrauch in der Nähe des Fahrzeugs angeordnet ist, und eine distale Seite gegenüber der proximalen Seite umfasst, wobei der erste Elektromotor (100) und der zweite Elektromotor (200) nebeneinander in dem Hohlraum angeordnet sind, wobei der erste Elektromotor (100) an der proximalen Seite und der zweite Elektromotor (200) an der distalen Seite angeordnet sind.

14. Externe Sichteinheit für ein Fahrzeug, die eine Einstellvorrichtung nach einem der vorstehenden Ansprüche und ein am Rahmen montiertes Sichtelement umfasst.

15. System, das eine Einstellvorrichtung umfasst nach einem der Ansprüche 1 bis 13 oder eine externe Sichteinheit nach Anspruch 14 und ein Türsteuerungsmodul (370), das funktionsfähig mit der Einstellvorrichtung verbunden ist, zum Senden eines Leistungssignals an die Einstellvorrichtung, wobei insbesondere das Leistungssignal nur ein Hochleistungssignal von mindestens 5 Watt, ganz insbesondere von mindestens 10 Watt, zum Antreiben des ersten Elektromotors (100) umfasst, und wobei das Leistungssignal optional ein Signal mit niedriger Leistung von höchstens 5 Watt, wie beispielsweise höchstens 2 Watt, zum Antreiben des zweiten Elektromotors (200) umfasst.

## Revendications

1. Dispositif de réglage pour régler une orientation d'un élément de vision externe d'un véhicule autour d'un premier axe de pivot (50) et d'un deuxième axe de pivot (52), le dispositif de réglage comprenant :
une base (74) pour se coupler à un véhicule ;
un cadre (46, 48) couplé, de manière pivotante, à la base (74), le cadre ayant une première partie de cadre (46) qui peut pivoter par rapport à la base (74) autour du premier axe de pivot (50) et une deuxième partie de cadre (48) qui peut pivoter par rapport à la première partie de cadre (46) autour du deuxième axe de pivot (52) ; et
une unité d'entraînement pour entraîner le cadre (46, 48) de manière pivotante autour du premier axe de pivot (50) et du deuxième axe de pivot (52) ;
dans lequel l'unité d'entraînement comprend un premier groupe motopropulseur (23) opérationnel entre la première partie de cadre (46) et la base (74) ayant un premier moteur électrique (100) raccordé, via une première transmission (22), à un premier élément entraîné (10) pour entraîner la première partie de cadre (46) par rapport à la base (74) autour du premier axe de pivot (50), et un second groupe motopropulseur (25) opérationnel entre la première partie de cadre (46) et la deuxième partie de cadre (48) ayant un deuxième moteur électrique (200) raccordé, via une deuxième transmission (24), à un deuxième élément entraîné (20) pour entraîner la deuxième partie de cadre (48) par rapport à la première partie de cadre (46) autour du deuxième axe de pivot (52) ;
dans lequel le deuxième moteur électrique (200) a une puissance nominale inférieure par rapport à une puissance nominale du premier moteur électrique (100), et dans lequel la deuxième transmission (24) applique un deuxième rapport de transmission de réduction de vitesse du deuxième moteur électrique (200) au deuxième élément entraîné (20), le deuxième rapport de transmission de réduction de vitesse fournissant une réduction de vitesse plus importante qu'un premier rapport de transmission fourni par la première transmission (22),
dans lequel le deuxième moteur électrique (200) a un plus petit facteur de forme par rapport au premier moteur électrique (100).

2. Dispositif selon la revendication 1, dans lequel le volume du deuxième moteur électrique est inférieur au volume du premier moteur électrique selon un facteur compris entre 1,1 et 4, et/ou dans lequel la consommation d'énergie maximum du deuxième moteur électrique (200) est inférieure à la consommation d'énergie maximum du premier moteur électrique (100) selon un facteur compris entre 1,1 et 4.

3. Dispositif selon l'une quelconque des revendications précédentes, dans lequel les premier et deuxième moteurs électriques (100, 200) sont alimentés par un module de commande de porte (370) commun du véhicule.

4. Dispositif selon l'une quelconque des revendications précédentes, dans lequel le premier moteur électrique (100) et le deuxième moteur électrique (200) sont des moteurs électriques de faible puissance, en particulier des moteurs électriques à courant continu de faible puissance.

5. Dispositif selon l'une quelconque des revendications précédentes, dans lequel une consommation de courant combinée maximum du premier moteur électrique (100) et du deuxième moteur électrique (200) combinés est au maximum comprise entre 1 et 2 ampères, de préférence au maximum de 1,5 ampère.

6. Dispositif selon l'une quelconque des revendications précédentes, dans lequel le premier axe de pivot (50) et le deuxième axe de pivot (52) ne sont pas parallèles entre eux.

7. Dispositif selon l'une quelconque des revendications précédentes, dans lequel la deuxième transmission (24) comprend au moins trois étages de réduction pour réduire une vitesse de sortie du deuxième moteur électrique (200) à une vitesse réduite du deuxième élément entraîné (20).

8. Dispositif selon la revendication 7, dans lequel la deuxième transmission (24) comprend un étage de transmission d'entrée de la sortie du deuxième moteur électrique à un élément de transmission intermédiaire principal, un étage de transmission intermédiaire entre l'élément de transmission intermédiaire principal et un élément de transmission intermédiaire secondaire et un étage de transmission de sortie de l'élément de transmission intermédiaire secondaire au deuxième élément entraîné (20), facultativement dans lequel la deuxième transmission (24) comprend un évoloïde et/ou un engrenage évoloïde.

9. Dispositif selon l'une quelconque des revendications précédentes, dans lequel la première transmission (22) comprend un étage de transmission unique de la sortie du premier moteur électrique au premier élément entraîné (10).

10. Dispositif selon la revendication 9, dans lequel la première partie de cadre (46) peut pivoter par rapport à la base (74) uniquement autour du premier axe de pivot (50) et/ou dans lequel la deuxième partie de cadre (48) peut pivoter par rapport à la première partie de cadre (46) uniquement autour du deuxième axe de pivot (52).

11. Dispositif selon l'une quelconque des revendications précédentes, dans lequel un axe de sortie du premier moteur électrique (100) est parallèle au premier axe de pivot (50) et/ou dans lequel un axe de sortie du deuxième moteur électrique (200) est parallèle au premier axe de pivot (50).

12. Dispositif selon l'une quelconque des revendications précédentes, dans lequel un axe de sortie du premier moteur électrique est parallèle au deuxième axe de pivot (52) et/ou dans lequel un axe de sortie du deuxième moteur électrique (200) est parallèle au deuxième axe de pivot (52).

13. Dispositif selon l'une quelconque des revendications précédentes, dans lequel le cadre comprend un couvercle en forme de coque qui définit une cavité pour maintenir l'unité d'entraînement, le couvercle en forme de coque comprenant un côté proximal pour être agencé, à l'usage, à proximité du véhicule et un côté distal opposé au côté proximal, dans lequel le premier moteur électrique (100) et le deuxième moteur électrique (200) sont agencés de manière adjacente entre eux dans la cavité, le premier moteur électrique (100) étant au niveau du côté proximal et le deuxième moteur électrique (200) étant au niveau du côté distal.

14. Unité de vision externe pour un véhicule comprenant un dispositif de réglage selon l'une quelconque des revendications précédentes et un élément de vision monté sur le cadre.

15. Système comprenant un dispositif de réglage selon l'une quelconque des revendications 1 à 13, ou une unité de vision externe selon la revendication 14, et un module de commande de porte (370) raccordé, de manière opérationnelle, au dispositif de réglage pour envoyer un signal d'alimentation au dispositif de réglage, dans lequel, en particulier, le signal d'alimentation comprend uniquement un signal haute puissance d'au moins 5 watts, plus particulièrement d'au moins 10 watts, pour alimenter le premier moteur électrique (100), et facultativement dans lequel le signal d'alimentation comprend un signal faible puissance au maximum de 5 watts, tel qu'au maximum de 2 watts, pour alimenter le deuxième moteur électrique (200).
